# EUROPEAN PATENT APPLICATION

(11) **EP 0 942 579 A2**
(43) Date of publication of application: **15.09.1999**
(21) Application number: 99301936.3
(22) Date of filing: 12.03.1999
(51) Int. Cl.: H04M 11/06, H04B 1/66

(54) **Variable rate audio packet transmission in cellular radio network**

(30) Priority: 13.03.1998 JP 06354898
(71) Applicant: SONY CORPORATION, Tokyo (JP)
(72) Inventor: Komiya, Kozo, Shinagawa-ku, Tokyo (JP)
(74) Representative: Nicholls, Michael John

(57) **Abstract**

In a transmission method and a transmission apparatus, variable-rate audio packet data obtained by compression-coding audio data for each fixed period of time with a compression rate according to the information amount of the audio data is transmitted together with predetermined control data. In case where the audio packet data to be transmitted have a maximum of transmittable data amount and no free area exists for the control data to simultaneously transmit said audio packet data and said control data in said period of time, the data amount of the audio packet data generated for each period of time is restricted by raising the compression rate to a predetermined value, and frame data generated by synthesizing the audio packet data whose data amount is restricted and the control data to be inserted in the free area for the restricted data amount is transmitted in the period of time.

## Description

The present invention relates to a transmission method and a transmission apparatus, and more particularly, is preferably but not exclusively applied to a cellular radio communication system of the code division multiple access (CDMA) system.

In the cellular radio communication system, an area in which communication service is provided is divided into cells of desired sizes, a base station is installed in each of cells as a fixed radio communication station, and a portable telephone as a mobile station radio-communicates with the base station in the cell where the portable telephone itself exists.

In this case, a variety of communication systems for communicating between the portable telephone and the base station have been proposed, and the code division multiple access system called the CDMA system is a typical one. In the CDMA system, at the transmission side, a pseudo random noise sequence (PN) code, which is composed of pseudo random sequence codes, having an inherent pattern is assigned to each communication line. The assigned PN code is multiplied by a primary modulated signal of the same carrier frequency, so as to be spreaded over a wider bandwidth than the original frequency bandwidth (hereinafter referred to as a spectrum spread), and a secondary modulated signal subjected the spectrum spread processing is transmitted.

On the other hand, at the reception side, the transmitted signal from the transmission side is received, the received signal is multiplied by the PN code having the same sequence pattern and the same phase as those of the PN code assigned to each communication line at the transmission side so as to be subjected to an inverse spread processing and thereby, a primary modulation output is obtained. Moreover, the primary modulation output is demodulated, so that the transmitted data is restored.

In the CDMA system as described above, since same PN codes are generated at the transmission side and the reception side each other, the demodulation can be performed only in the case where the inverse spread processing is performed at the reception side by using the PN code having the same sequence pattern and the same phase as those of the PN code which has been used at the transmission side. Therefore, there are advantages that the system is immune against interference waves and exceeds in secrecy.

In the portable telephone (hereinafter referred to as a mobile station) in the cellular radio communication system of the CDMA system, when the mobile station moves over the cells, it is necessary to receive an instruction to switch a call, for example, from the base station A to the base station B and then transmit response information for the instruction to the base station A; and to report frame error information in accordance with the reception state of the radio wave from the base station A, to the base station A. In this case, the mobile station must readily transmit the response information, the error information and the like, as control data to the base station A.

The mobile station transmits audio packet data with a high data rate generated by compression-coding audio information with a lower compression rate in the portion where audio is present, while it transmits audio packet data with a low data rate generated by compression-coding the audio information with a higher compression rate in the portion where the audio is not present but only background noise is present. Thus, the mobile station generates variable-rate audio packet data by varying the compression rate according to a difference of an amount of the audio information and transmits the variable-rate audio packet data in a fixed period of time (hereinafter referred to as a frame, which is 20 milliseconds) as transmission frame data in a predetermined format.

Therefore, since the mobile station transmits the audio packet data with a low data rate in the portion where the audio is not present but only the background noise is present, a free area for simultaneously transmitting the control data is generated in the transmission frame data due to the low data rate. Thereby, the mobile station generates the transmission frame data composed of the audio packet data and the control data by inserting and synthesizing the control data in the free area, and transmits the transmission frame data to the base station in one frame.

However, since the mobile station generates the audio packet data with the highest data rate by compression-coding the audio information with the lowest compression rate in the portion where the audio information is abundant such as conversation in progress, there is no free area in which the control data is inserted when generating the transmission frame data. Therefore, the control data and the audio packet data cannot be transmitted simultaneously in one frame.

When the mobile station transmits the control data despite the above situation, it suspends sending of the transmission frame data composed of only the audio packet data by one frame and thereby, by using the one frame (20 milliseconds), the mobile station generates and transmits the frame data composed of only the control data. Thus, there is a problem that a short break of the audio is occurred during conversation because of temporary suspension of the transmission of the audio packet data even for one frame.

In view of the foregoing, it would be desirable to provide a transmission method and a transmission apparatus which can transmit the control data without any short break of the audio even when the transmission side is required to transmit the control data.

According to the present invention, there is provided a transmission method and a transmission apparatus which transmits variable-rate audio packet data obtained by compression-coding audio data for each fixed period of time with a compression rate according to the information amount together with predetermined control data. In the case where audio packet data to be transmitted have a maximum of transmittable data amount and no free area exists for said control data to simultaneously transmit the audio packet data and the control data in the period of time, the data amount of the audio packet data generated for said each period of time is restricted by raising the compression rate to a predetermined value, and frame data generated by synthesizing the audio packet data whose data amount is restricted and the control data to be inserted in the free area for the restricted data amount is transmitted in the period of time.

Even in the case where the control data cannot be transmitted simultaneously because a data amount of the audio packet data obtained by coding high-volume audio data with a predetermined compression rate is voluminous, the audio packet data can be always transmitted without any short break by restricting in advance the data amount of the audio packet data to be coded and transmitting the control data simultaneously by using the free area for the restricted audio data.

To allow better understanding, preferred embodiments of the present invention will be described by way of non-limitative example with reference to the accompanying drawings in which like parts are designated by like reference numerals or characters, and in which:
Fig. 1 is a block diagram showing the configuration of the mobile station according to one embodiment of the present invention;
Fig. 2 is a schematic diagram showing state transition on the protocol in a central processing unit (CPU);
Fig. 3 is a schematic diagram showing a hierarchical structure model in the CPU;
Fig. 4 is a schematic diagram showing the processing details in a multiplexer sub-layer;
Fig. 5 is a schematic diagram showing the format of the audio packet data communicated between the CPU and a digital signal processor (DSP);
Fig. 6 is a schematic diagram showing the frame format;
Fig. 7 is a flowchart showing the procedure for generating the transmission frame data of the CPU in the multiplexer sub-layer;
Fig. 8 is a diagram showing categories selected according to the frame-based rate and presence/absence of the control data according to the prior art; and
Fig. 9 is a diagram showing categories selected according to the frame-based rate and presence/absence of the control data according to the present invention.

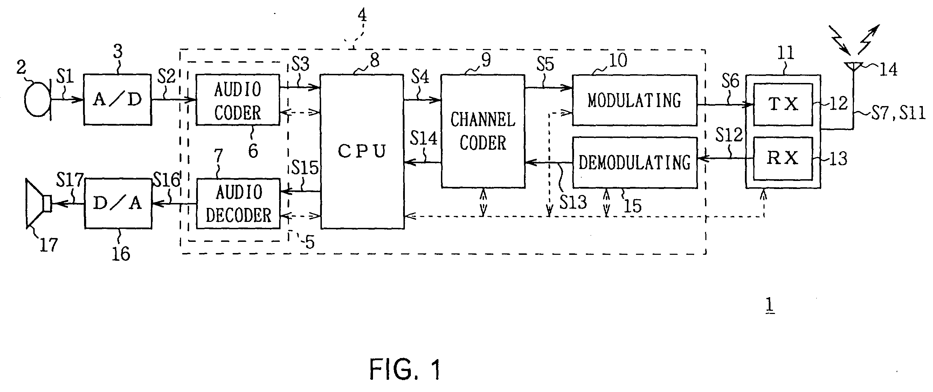

In Fig. 1, a mobile station 1 in a cellular radio communication system of the CDMA system is shown as a whole. An analog audio signal S1 collected via a microphone 2 is transmitted to an analog/digital converter 3 when the voice in the conversation is to be transmitted. The analog/digital converter 3 converts the audio signal S1 into digital audio data S2 and outputs the audio data S2 to a digital signal processor (DSP) section 5 in a baseband block 4.

The DSP section 5 composed of an audio coder 6 and an audio decoder 7, generates audio packet data S3 by compression-coding the audio data S2 by the audio coder 6 with a compression rate according to the information amount of the audio data S2 for each fixed period of time (frame), and then transmits the audio packet data S3 to a central processing unit (CPU) 8.

When there is any control data to be transmitted to the base station, the CPU 8 synthesizes the control data and the audio packet data S3 based on categories of a predetermined format as mentioned later and transmits the synthesized data as transmission frame data S4 to a channel coder 9. In this case, the control data contains, for example, response information for a call switchover instruction given from the base station when the mobile station 1 moves over cells.

In this connection, the CPU 8 controls transmission and reception operation of the entire mobile station 1 by controlling (indicated by broken lines) the DSP section 5, the channel coder 9, a modulating circuit 10, a demodulating circuit 15 and a radio frequency (RF) circuit 11.

The channel coder 9 generates a transmission symbol stream S5 by applying an error correction processing in accordance with the cyclic redundancy check (CRC) system and then applying a convolutional coding processing to the transmission frame data S4, and then transmits the transmission symbol stream S5 to the modulating circuit 10. The modulating circuit 10 performs the spectrum spread processing by multiplying the transmission symbol stream S5 by a spread code and applies, for example, the QPSK modulation processing, so as to generate a transmission symbol stream S6, and then transmits the transmission symbol stream S6 to the RF circuit 11.

The RF circuit 11 composed of a transmission circuit (TX) 12 and a reception circuit (RX) 13, filters the transmission symbol stream S6 and converts the transmission symbol stream S6 into an analog signal in order to obtain a transmission signal by the transmission circuit 12. Then the transmission circuit 12 frequency-converts the transmission signal to generate a transmission signal S7 of a predetermined frequency channel, amplifies the transmission signal S7 to predetermined power, and transmits the signal through an antenna 14.

On the other hand, when receiving the transmission signal from the base station, the mobile station 1 receives the transmission signal through the antenna 14 and inputs the signal as a reception signal S11 to the reception circuit 13 of the RF circuit 11. The reception circuit 13 extracts a baseband signal by amplifying the input reception signal S11 and applying the frequency conversion processing to the reception signals S11, filters the baseband signal. Then, the reception circuit 13 extracts a reception signal S12 under the spread processing by converting the baseband signal into a digital signal, and transmits the reception signal S12 to the demodulating circuit 15.

The demodulating circuit 15 extracts symbol information by applying the QPSK demodulation processing to the reception signals S12, and generates a reception symbol stream S13 by applying the inverse spread processing with the spread code having the same sequence pattern and the same phase as those of the transmission side to the extracted reception symbol stream, and transmits the reception symbol stream S13 to the channel coder 9.

The channel coder 9 considers a trellis of the convolutional code based on the reception symbol stream S13, estimates the most likely state among all state transitions which can be considered as data (so-called maximum likelihood sequence estimation), thereby restores the reception data indicating the transmitted data, then generates reception frame data S14 by applying an error detection processing in accordance with the CRC system to the reception data, and transmits the reception frame data S14 to the CPU 8.

The CPU 8 extracts audio packet data S15 from the reception frame data S14 and transmits it to the audio decoder 7. At this time, the CPU 8 extracts the audio packet data S15 so as to transmit it to the audio decoder 7, and besides, extracts the control data from the reception frame data S14 so as to perform a protocol processing based on the control data.

The audio decoder 7 converts the audio packet data S15 into audio data S16 by decoding the audio packet data S15 with the predetermined system according to the coding processing of the audio coder 6, and transmits the audio data S16 to a digital/analog converter 16. The digital/analog converter 16 converts the digital audio data S16 into an analog signal, so that the digital audio data S16 is converted into audio information S17 and outputted as voice via a speaker 17.

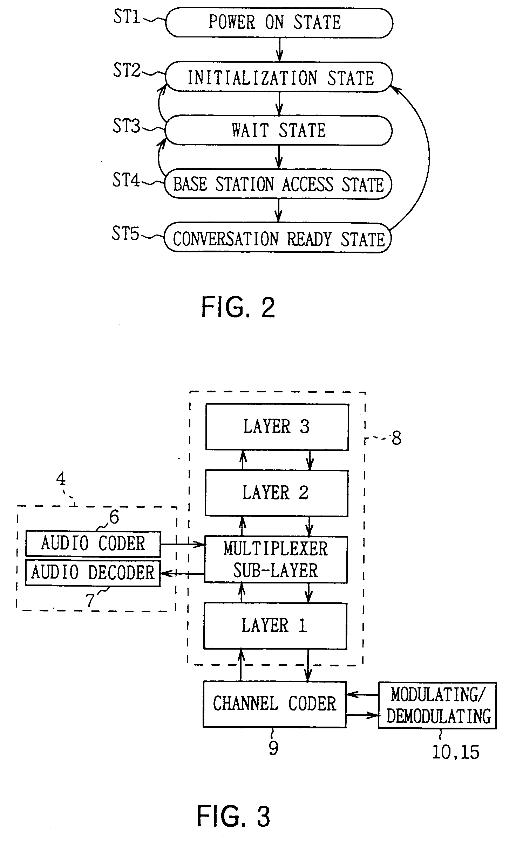

Fig. 2 shows the state transition on the protocol which the CPU 8 uses to control operation of the mobile station 1. In the state ST1, the CPU 8 detects that power is supplied, and moves to the state ST2. In the state ST2, the CPU 8 initializes, immediately after the power ON, various information such as information on a traffic channel preciously connected and synchronisation information, and moves to the next state ST3.

In the state ST3, the CPU 8 waits for a call request from users and an incoming call from the base station. Upon receiving such call request or incoming call, the CPU 8 moves to the next state ST4. In the state ST4, the CPU 8 transmits control information concerning connection control necessary for reserving a traffic channel TCH for conversation, via the control channel CCH to the base station, and moves to the next state ST5.

In the state ST5, the CPU 8 does not move to the conversation ready state and does not start conversation until the traffic channel TCH is assigned by the base station. In this case, on the completion of an actual conversation, the CPU 8 returns to the state ST2 again, where it performs initialization of information for the next conversation and performs the processings of the state ST3 and the subsequent states.

A software processing state performed by the CPU 8 in the state ST5, the conversation ready state, is explained using a hierarchical structure model shown in Fig. 3. In this case, a layer 3, a layer 2, a multiplexer sub-layer and a layer 1 are software blocks under the control of the CPU 8.

In the layer 3, when the CPU 8 receives, for example, a call switchover instruction for performing a handover from the base station while an actual conversation is in progress in the conversation ready state of the state ST5, the CPU 8 determines to produce the response information for the instruction.

Next in the layer 2, in the case where the CPU 8 transmits the response information to the base station, the CPU 8 produces the control data for requesting the base station to return an acknowledgment when the base station receives the response information and for re-sending the response information if the acknowledgment is not returned.

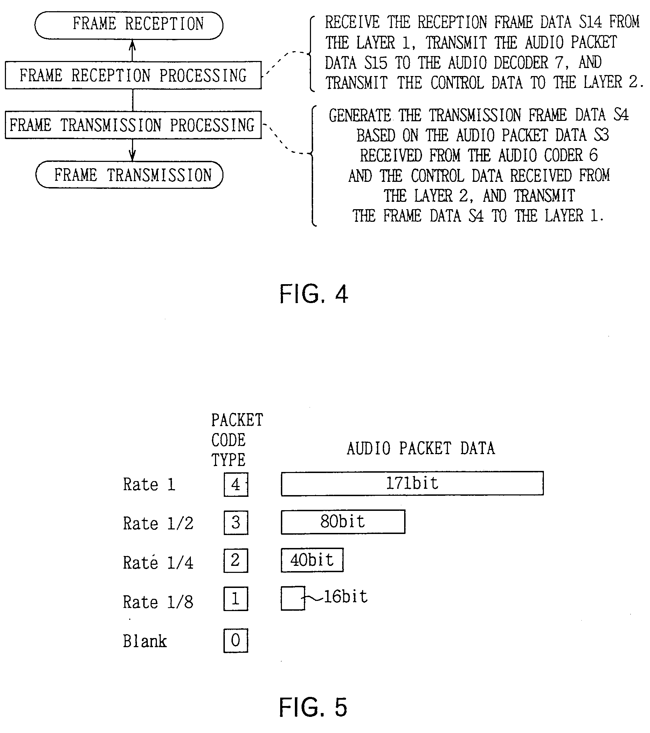

In the multiplexer sub-layer, as in the frame transmission processing shown in Fig. 4, the CPU 8 generates the transmission frame data S4 by synthesizing the control data produced in the layer 2 and the audio packet data S3 coded for each frame by the audio coder 6, based on the category of the predetermined format, and transmits the transmission frame data S4 to the layer 1.

In the layer 1, the CPU 8 supplies the transmission frame data S4 generated in the multiplexer sub-layer to the channel coder 9, generates the transmission signal S7 by executing the processings of the channel coder 9 and the subsequent units, and transmits the transmission signal S7 through the antenna 14 to the base station.

On the other hand, in case of receiving, the CPU 8 recognizes the locations of the audio data and the control data based on the format bits added to the reception frame data S14 supplied from the channel coder 9 in the layer 1. Then, as in the frame reception processing shown in Fig. 4, the CPU 8 transmits the audio packet data S15 out of the reception frame data S14 to the audio decoder 7 and the control data to the layer 2, in the multiplexer sub-layer.

Thus, the audio data is decoded by the audio decoder 7, and outputted via the speaker 17 after being converted into the analog voice by the digital/analog converter 16, and the control data is subjected to the protocol processing by the CPU 8.

The audio coder 6 generates the audio packet data S3 by executing the audio coding processing for each frame. At this time, one frame corresponds to 20 milliseconds, and the audio packet data S3 is communicated for each frame (20 milliseconds) between the CPU 8 and the audio coder 6 of the DSP section 5.

In this case, as shown in Fig. 5, five types of formats for the audio packet data S3 are provided. The rate 1 shows the case where no silent portion exists but the audio information exists voluminously. In the rate 1, the highest 171-bit audio packet data S3 is generated through the compression-coding with the lowest compression rate. The rate 1/2 shows the case where the audio information is fewer than that of the rate 1. In the rate 1/2, the 80-bit audio packet data S3 is generated through the compression-coding with a little higher compression rate than the rate 1.

The rate 1/4 shows the case where the audio information is further fewer than that of the rate 1/2. In the rate 1/4, the 40-bit audio packet data S3 is generated through the compression-coding with a little higher compression rate than the rate 1/2. The rate 1/8 shows the case where the audio information is further fewer than that of the rate 1/4. In the rate 1/8, the 16-bit audio packet data S3 is generated through the compression-coding with a little higher compression rate than the rate 1/4. Finally, a blank shows the case where the no audio information exists.

Five types of audio packet data generated according to these formats are identified by the accompanying packet type code. The five format types are arbitrarily determined for each frame depending on the information amount of the audio data S2 by the audio coder 6. That is, frames abounding with a large information amount of the audio data S2 during conversation are coded by the audio coder 6 with the rate 1, while frames with a small amount of information which are contaminated by background noise are coded by the audio coder 6 with a higher compression rate, from the rate 1/2 to the rate 1/8, as the rate of information amount in the audio data S2 decreases.

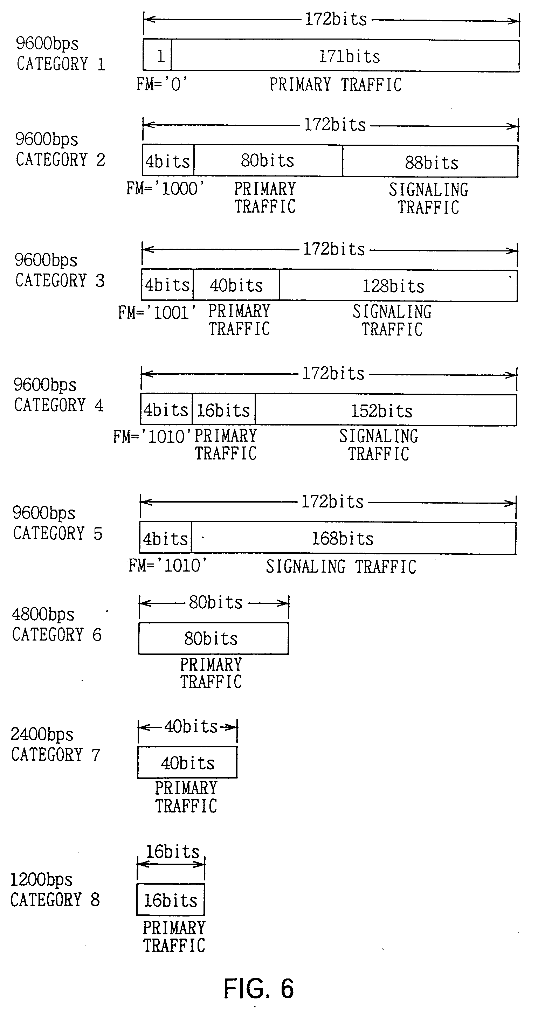

The audio packet data thus generated according to one of the above formats is synthesized with the control data by using one of the eight frame formats, category 1 through category 8, as shown in Fig. 6, so that the transmission frame data S4 is generated. In this connection, this transmission frame data S4 is also transmitted to the channel coder 9 every frame (20 milliseconds).

The category 1 through the category 5 are frame formats of transmitting at 9600bps, in which a frame mode bit composed of one bit or four bits is added to the head of the frame. This allows the reception side to read the frame mode bit of the received transmission frame data S4 in order to identify the type of the category.

In this connection, the frame mode bit added to the head of the frame in the category 1 through the category 5 are as follows: for the category 1, one-bit data "0" is added; for the category 2, four-bit data "1,0,0,0" is added; for the category 3, four-bit data "1,0,0,1" is added; and for the category 4, four-bit data "1,0,1,0" is added.

In the category 1 through the category 5, the audio packet data S3 is set in a primary traffic and the control data is set in a signaling traffic. Therefore, the category 1 is the format composed of only the audio packet data S3 of the rate 1, and the category 2 is the frame format composed of the audio packet data S3 of the rate 1/2 and the control data almost half-and-half.

The category 3 is the frame format composed of the audio packet data S3 of the rate 1/4 and the control data, and the category 4 is the frame format composed of the audio packet data S3 of the rate 1/8 and the control data. Finally, the category 5 is the frame format composed of 168-bit control data alone, without any audio packet data S3.

Further, the category 6 through the category 8 contain no control data, and are frame formats composed of the audio packet data S3 of the rate 1/2, the rate 1/4 and the rate 1/0, with transmission rate of 4800bps, 2400bps and 1200bps, respectively.

That is, when the CPU 8 generates the transmission frame data S4, in the case where the control data is absent and only the audio packet data S3 is present, the category 1 and the category 6 through the category 8 are available for selections; and in the case where the control data and the audio packet data S3 are present, the category 2 through the category 4 are available for selections. At this time, if the audio packet data S3 is present alone and the control data is absent, the category 1 is selected; and if the audio packet data S3 is absent and only the control data is present, the category 5 is selected.

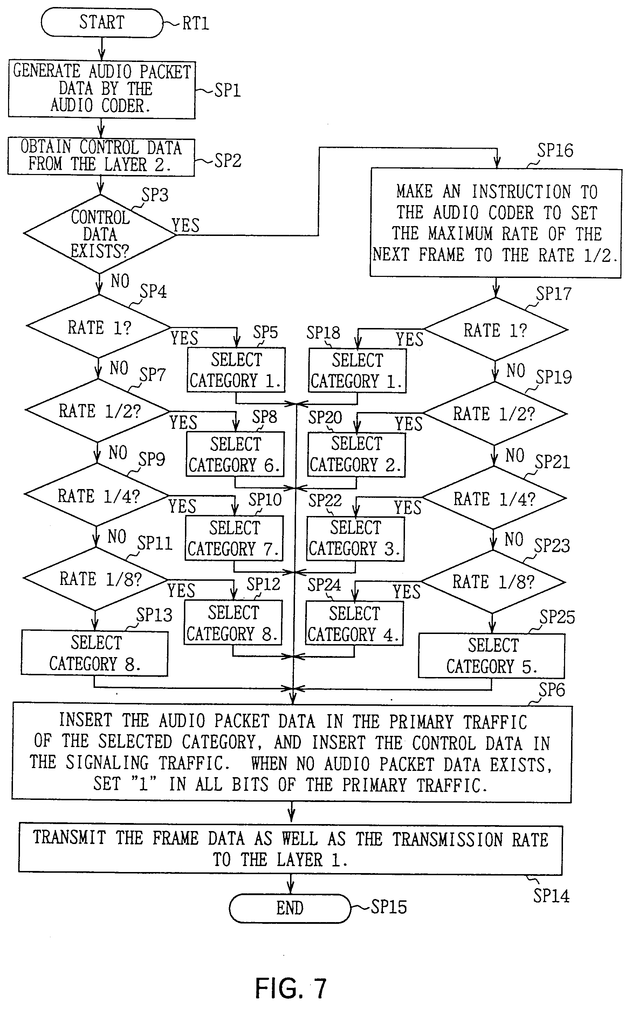

By using the flowchart of Fig. 7, the processing procedure of the CPU 8 in the multiplexer sub-layer, from generation of the transmission frame data S4 to transmission of the data S4, according to such frame formats is explained. Namely, the CPU 8 of the mobile station 1 starts with the start step RT1 and moves to the step SP1.

In the step SP1, the CPU 8 codes the audio data S2 with the compression rate according to the information amount of the audio data S2 by the audio coder 6 for each frame in order to generate the audio packet data S3, and moves to the next step SP2. In the step SP2, if any control data to be transmitted exists, the CPU 8 obtains the control data from the layer 2 and moves to the next step SP3.

In the step SP3, the CPU 8 determines whether the control data to be transmitted to the base station is present or not. The negative result here means that no control data is present in transmitting the audio packet data S3 to the base station, that is, only the audio packet data S3 is to be transmitted. In this case, the CPU moves to the step SP4.

In the step SP4, the CPU determines whether the compression rate of the audio packet data S3 is the rate 1 or not, by reading the packet code type (Fig. 5) accompanying the audio packet data S3. The positive result here means that the packet code type is "4", that is, the audio packet data S3 is 171-bit data compression-coded with the rate 1. In this case, the CPU moves to the step SP5.

In the step SP5, the CPU 8 selects the category 1 which is optimum for the audio packet data S3 without the control data, which has been compression-coded with the rate 1, then moves to the next step SP6. On the other hand, the negative result in the step SP4 means that the audio packet data S3 is not 171-bit data compression-coded with the rate 1. In this case, the CPU 8 moves to the step SP7.

In the step SP7, the CPU 8 determines whether the compression rate of the audio packet data S3 is the rate 1/2 or not, by reading the packet code type accompanying the audio packet data S3. The positive result here means that the packet code type is "3", that is, the audio packet data S3 is 80-bit data compression-coded with the rate 1/2. In this case, the CPU 8 moves to the step SP8.

In the step SP8, the CPU 8 selects the category 6 which is optimum for the audio packet data S3 without the control data, which has been compression-coded with the rate 1/2, then moves to the next step SP6. On the other hand, the negative result in the step SP7 means that the audio packet data S3 is not 80-bit data compression-coded with the rate 1/2. In this case, the CPU 8 moves to the step SP9.

In the step SP9, the CPU 8 determines whether the compression rate of the audio packet data S3 is the rate 1/4 or not, by reading the packet code type accompanying the audio packet data S3. The positive result here means that the packet code type is "2", that is, the audio packet data S3 is 40-bit data compression-coded with the rate 1/4. In this case, the CPU 8 moves to the step SP10.

In the step SP10, the CPU 8 selects the category 7 which is optimum for the audio packet data S3 without the control data, which has been compression-coded with the rate 1/4, then moves to the next step SP6. On the other hand, the negative result in the step SP9 means that the audio packet data S3 is not 40-bit data compression-coded with the rate 1/4. In this case, the CPU moves to the step SP11.

In the step SP11, the CPU determines whether the compression rate of the audio packet data S3 is the rate 1/8 or not, by reading the packet code type accompanying the audio packet data S3. The positive result here means that the packet code type is "1", that is, the audio packet data S3 is 16-bit data compression-coded with the rate 1/8. In this case, the CPU 8 moves to the step SP12.

In the step SP12, the CPU 8 selects the category 8 which is optimum for the audio packet data S3 without the control data, which has been compression-coded with the rate 1/8, then moves to the next step SP6. On the other hand, the negative result in the step SP11 means that the packet code type is "0" and the audio packet data S3 is absent. In this case, the CPU 8 moves to the step SP13.

In the step SP13, the CPU 8 selects the category 8 with the lowest rate because the audio packet data S3 is absent, then moves to the next step SP6. In the step SP6, the CPU 8 generates the transmission frame data S4 by setting the audio packet data S3 in the primary traffic of the selected category, or by setting "1" in all bits of the primary traffic if the audio packet data S3 is absent, and then the CPU 8 moves to the next step SP14. In this case, since no control data exists, the category 2 through the category 5 where the signaling traffic exists are never selected.

In the step SP14, the CPU 8 transmits the generated transmission frame data S4 to the layer 1 and also transmits the transmission rate information set to the selected category (9600bps, 4800bps, 2400bps, or 1200bps), and terminates the processing in the next step SP15.

On the other hand, the positive result in the step SP3 means that the control data to be transmitted to the base station exists in transmitting the audio packet data S3. In this case, the CPU 8 moves to the step SP16.

In the step SP16, the CPU 8 makes an instruction once to the audio coder 6 to set the maximum rate of the next frame, which is next coded, to the rate 1/2 in relation to the next frame, then moves to the next step SP17.

In the step SP17, the CPU 8 determines whether the compression rate of the audio packet data S3 is the rate 1 or not, by reading the packet code type accompanying the current audio packet data S3. The positive result here means that the packet code type is "4", that is, the audio packet data S3 is 171-bit data compression-coded with the rate 1. In this case, the CPU 8 moves to the step SP18.

In the step SP18, since the audio packet data S3 is coded with the rate 1, no free area exists for transmitting the control data simultaneously as the transmission frame data S4. Therefore, the CPU 8 selects the category 1 in order to transmit only the audio packet data S3 in precedence without transmitting the control data, and then moves to the next step SP6.

On the contrary, the negative result in the step SP17 means that the audio packet data S3 is not 171-bit data compression-coded with the rate 1. In this case, the CPU 8 moves to the step SP19.

In the step SP19, the CPU 8 determines whether the compression rate of the audio packet data S3 is the rate 1/2 or not, by reading the packet code type accompanying the audio packet data S3. The positive result here means that the packet code type is "3", that is, the audio packet data S3 is 80-bit data compression-coded with the rate 1/2. In this case, the CPU 8 moves to the step SP20.

In the step SP20, since the audio packet data S3 is coded with the rate 1/2, the CPU 8 selects the category 2 which is capable of simultaneous transmission of the control data, and moves to the next step SP6. On the other hand, the negative result in the step SP19 means that the audio packet data S3 has not been coded with the rate 1/2. In this case, the CPU 8 moves to the step SP21.

In the step SP21, the CPU determines whether the compression rate of the audio packet data S3 is the rate 1/4 or not, by reading the packet code type accompanying the audio packet data S3. The positive result here means that the packet code type is "2", that is, the audio packet data S3 is 40-bit data compression-coded with the rate 1/4. In this case, the CPU moves to the step SP22.

In the step SP22, since the audio packet data S3 is coded with the rate 1/4, the CPU 8 selects the category 3 which is capable of simultaneous transmission of the control data, and moves to the next step SP6. On the other hand, the negative result in the step SP21 means that the audio packet data S3 has not been coded with the rate 1/4. In this case, the CPU 8 moves to the step SP23.

In the step SP23, the CPU 8 determines whether the compression rate of the audio packet data S3 is the rate 1/8 or not, by reading the packet code type accompanying the audio packet data S3. The positive result here means that the packet code type is "1", that is, the audio packet data S3 is 16-bit data compression-coded with the rate 1/8. In this case, the CPU 8 moves to the step SP24.

In the step SP24, since the audio packet data S3 is coded with the rate 1/8, the CPU 8 selects the category 4 which is capable of simultaneous transmission of the control data, and moves to the next step SP6. On the other hand, the negative result in the step SP23 means that the audio packet data S3 has not been coded with the rate 1/8. In this case, the CPU 8 moves to the step SP25.

In the step SP25, since the audio packet data S3 is not coded with any of the rate 1 through the rate 1/8, the CPU 8 can determine that the audio packet data S3 is a blank where the audio packet data S3 is absent, then the CPU 8 selects the category 5 for transmitting only the control data, and moves to the next step SP6.

In the step SP6, the CPU 8 generates the transmission frame data S4 by setting the audio packet data S3 in the primary traffic of the selected category, and setting the control data in the signaling traffic or setting "1" in all bits of the primary traffic if the audio packet data S3 is absent, and then the CPU 8 moves to the next step SP14.

In the step SP14, the CPU 8 transmits the generated transmission frame data S4 to the layer 1 and also transmits the transmission rate information set to the selected category (9600bps, 4800bps, 2400bps, or 1200bps), and terminates the processing in the next step SP15.

In this way, even when the CPU 8 needs to simultaneously transmit the audio packet data S3 compression-coded with the rate 1 in the multiplex sub-layer and the control data to be transmitted to the base station, the mobile station 1 transmits only the audio packet data S3 using the transmission frame data S4 generated in the category 1 with respect to the current frame. Then the mobile station 1 generates the 80-bit audio packet data S3 by compression-coding the audio data S2 of the next frame with the rate 1/2, generates the transmission frame data S4 by synthesizing the 80-bit audio packet data S3 and the control data in the category 2, and transmits the transmission frame data S4, so that the audio packet data S3 can be surely transmitted without any short break.

In this case, the timing between an occurrence of the need for transmitting the control data and an actual transmission of the control data is delayed for one frame. However, in the CPU 8, since the time required to actually transmit the control data from the occurrence of the need for the transmission is specified as approximately 0.1 or more seconds by a standard (IS-95 system), it causes no problem that the transmission of the control data is delayed for one frame (20 milliseconds).

In the above configuration, in the case where the CPU 8 of the mobile station 1 transmits only the audio packet data S3 during the conversation without any control data to be transmitted to the base station, the CPU 8 can select any of the category 1 and the categories 6 to 8 corresponding to the compression rate (rate) of the audio packet data in order to transmit the data for each frame.

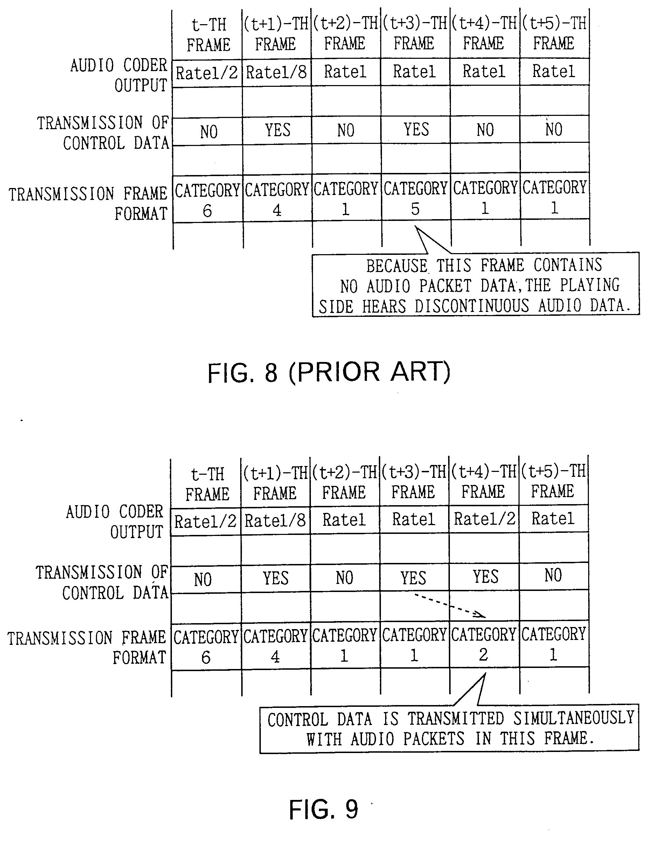

As shown in Fig. 8, in the case where there is the control data to be transmitted to the base station in addition to the audio packet data S3 during conversation and the compression rate of the audio packet data S3 is the rate 1, a CPU 8 of a conventional mobile station 1 selects the category 5 in the (t+3)-th frame in order to transmit the control data in precedence, thus it transmits only the control data.

However, in this case, a short break of call between the mobile station and the base station occurs because transmission of the audio packet data S3 is temporarily suspended for the duration of one frame of the transmission frame data S4.

On the contrary, as shown in Fig. 9, according to the present invention, in the case where there is the control data to be transmitted to the base station in addition to the audio packet data S3 during conversation and the compression rate of the audio packet data S3 is the rate 1, the CPU 8 of the mobile station 1 does not transmit the control data in precedence but selects the category 1 in order to transmit only the audio packet data S3 in precedence in the (t+3)-th frame.

The CPU 8 of the mobile station 1, in the next (t+4)-th frame, synthesizes the audio packet data S3 compression-coded by the audio coder 6 with the rate 1/2 and the control data by selecting the category 2, so as to transmit thus generated data as the transmission frame data S4. At this time, the audio packet data S3 is generated by compression-coding by the audio coder 6 with the rate 1/2, thereby deterioration of the audio packet data S3 can be minimized.

Thus, the mobile station 1 can always transmit the audio packet data S3 without interruption even when the coded audio packet data S3 and the control data are required to be transmitted simultaneously, thereby clear conversations can be realized without any short break.

According to the above configuration, in the case of simultaneously transmitting the variable-rate audio packet data S3 obtained by compression-coding the audio data S2 for each frame with the compression rate according to the information amount of the audio data S2 together with predetermined control data, the mobile station 1 restricts a data amount of the audio packet data S3 generated for each frame by raising the compression rate to a predetermined value when the data amount of the audio packet data S3 is maximum and no free area exists for simultaneously transmitting the audio packet data S3 and the control data for each frame, and transmits the transmission frame data S4 generated by synthesizing the audio packet data S3 whose data amount is restricted and the control data to be set in the free area for the restricted data amount, thereby the control data can be transmitted without causing a short break in conversations.

In the above embodiment, the present invention is applied to a case where the control data is transmitted from the mobile station to the base station in a cellular radio communication system. However, the present invention is not limited thereto, but can be also applied to a case where the control data is transmitted from the base station to the mobile station.

Further, in the above embodiment, a case is described where the audio data S2 of the next frame is compression-coded with the rate 1/2 by the instruction from the CPU 8. However, the present invention is not limited thereto, but the audio data S2 of the next frame can be compression-coded with the rate 1/4 or rate 1/8 on condition that deterioration of the audio packet data S3 needs not to be considered.

Further, in the above embodiment, a case is described where only the audio packet data S3 is transmitted as the transmission frame data S4 in the current frame, in the next frame, the transmission data S4 is generated by synthesizing the audio packet data S3 obtained by compression-coding the audio data S2 with the rate 1/2 and the control data according to the frame format of the category 2 and is transmitted. However, the present invention is not limited thereto, but the transmission frame data S4 can be generated by compression-coding the audio data S2 with the rate 1/2 in advance to restrict the data amount when the audio data S2 is voluminous and by synthesizing the control data for the thus restricted amount, so as to be transmitted.

Further, in the above embodiment, a case is described where the mobile station 1 as transmission means is composed of the audio coder 6 as audio coding means, the CPU 8 as a means for generating the frame data, the demodulating circuit 10 and the transmission circuit 12 as transmission means. However, the present invention is not limited thereto, but the mobile station 1 can be composed of a variety of other audio coding means, frame data generating means and transmission means.

Further, in the above embodiment, a case is described where the present invention is applied to the cellular radio communication system using the CDMA system. However, the present invention is not limited thereto, but can be applied to cellular radio communication systems of a variety of other communication systems, for example, the TDMA system.

While there has been described in connection with the preferred embodiments of the invention, it will be obvious to those skilled in the art that various changes and modifications may be aimed, therefore, to cover in the appended claims all such changes and modifications as fall within the true spirit and scope of the invention.

## Claims

1. A transmission method of transmitting variable-rate audio packet data obtained by compression-coding audio data for each fixed period of time with a compression rate according to the information amount together with predetermined control data, said transmission method comprising the steps of:
in case where audio packet data to be transmitted have a maximum of transmittable data amount and no free area exists for said control data to simultaneously transmit said audio packet data and said control data in said period of time, restricting the data amount of said audio packet data generated for said each period of time by raising said compression rate to a predetermined value; and
generating frame data by synthesizing said audio packet data whose data amount is restricted and said control data to be inserted in the free area for said restricted data amount, in order to transmit said generated frame data in said period of time.

2. The transmission method according to claim 1, wherein
in the case where said audio packet data to be transmitted have a maximum of transmittable data amount and no free area exists for said control data to simultaneously transmit said audio packet data and said control data in said period of time, only said audio packet data is transmitted; and
in a predetermined period of time among the subsequent periods of time, which is specified in the time between an occurrence of the need for transmitting said control data and an actual transmission of said control data, frame data generated by synthesizing said audio packet data whose data amount is restricted by rising said compression rate to the predetermined value and said control data to be inserted in the free area for said restricted data amount, is transmitted.

3. The transmission method according to claim 1 or 2, wherein said predetermined value is a compression rate which minimizes deterioration of said audio packet data.

4. A transmission apparatus for transmitting variable-rate audio packet data obtained by compression-coding audio data for each fixed period of time with a compression rate according to the information amount together with predetermined control data, said transmission apparatus comprising:
audio coding means for restricting the data amount of said audio packet data generated for said each period of time by raising said compression rate to a predetermined value, in the case where audio packet data to be transmitted have a maximum of transmittable data amount and no free area exists for said control data to simultaneously transmit said audio packet data and said control data in said period of time;
frame data generation means for generating frame data by synthesizing said audio packet data whose data amount is restricted and said control data to be inserted in the free area for said restricted data amount; and
transmission means for transmitting said frame data in said period of time after modulating said frame data by a predetermined system.

5. The transmission apparatus according to claim 4, wherein:
said transmission means is arranged, where said audio packet data to be transmitted have a maximum of transmittable data amount and no free area exists for said control data to simultaneously transmit said audio packet data and said control data in said period of time, to transmit only said audio packet data; and
said transmission means is arranged to transmit, in a predetermined period of time among the subsequent periods of time, which is specified in the time between an occurrence of the need for transmitting said control data and an actual transmission of said control data, frame data generated by synthesizing said audio packet data whose data amount is restricted by raising said compression rate to a predetermined value and said control data to be inserted in the free area for said restricted data amount

6. The transmission apparatus according to claim 4 or 5, wherein said predetermined value is a compression rate which minimizes deterioration of said audio packet data.
